# EUROPEAN PATENT SPECIFICATION

(11) **EP 2 158 665 B1**
(45) Date of publication and mention of the grant of the patent: **30.08.2017**
(21) Application number: 08762921.8
(22) Date of filing: 16.06.2008
(51) Int. Cl.: H02K 15/06, H02K 15/04

(54) **APPARATUS AND METHOD FOR WINDING AND INSERTING COILS IN CORES OF DYNAMOELECTRIC MACHINES**
VORRICHTUNG UND VERFAHREN ZUM WICKELN UND EINFÜGEN VON SPULEN IN DIE KERNE DYNAMOELEKTRISCHER MASCHINEN
APPAREIL ET PROCÉDÉ POUR BOBINER ET INSÉRER DES BOBINES DANS LES NOYAUX DE MACHINES DYNAMOÉLECTRIQUES

(30) Priority: 18.06.2007 IT TO20070436
(43) Date of publication of application: 03.03.2010
(73) Proprietor: ATOP S.p.A., 50021 Barberino Val d'Elsa (Firenze) (IT)
(72) Inventor: STRATICO, Gianfranco, I-50021 Barberino Val D'Elsa (Firenze) (IT); MUGELLI, Maurizio, I-50021 Barberino Val D'Elsa (Firenze) (IT)
(74) Representative: Notaro, Giancarlo
(86) International application number: PCT/IB2008/001600
(87) International publication number: WO 2008/155635

(56) References cited:
- EP-A- 0 631 368
- CH-A- 374 112
- GB-A- 2 135 603
- JP-A- 61 254 049
- US-A- 5 232 026

## Description

### BACKGROUND AND SUMMARY OF THE INVENTION

The inventions concerns devices for winding coils by using a form device having surface portions for receiving the wire or multiple parallel wires during winding. More particularly, the form device is rotated to draw the wire or the multiple wires from a wire dispenser onto the surface portions of the form device to wind the coils according to a predetermined configuration.

After winding, the wound coils can be transferred from the form device to an insertion tool, which has guide bars defining between each other spacing for receiving the coils. This transfer operation can be followed by insertion of the coils into the slots of the dynamo electric machine core.

Insertion of the coils occurs by aligning the slots of the core with the spacing created between guide bars of the insertion tool, and by successive pushing of the branches of the coils into the slots with a pushing device that moves through the central area of the insertion tool.

An insertion device according to these principles has been the subject of PCT/IB2007/001217 assigned to the same assignee of this application. An apparatus for winding coils is known from US 5 232 026 A, wherein an expulsion member pushes branches of wire coils during winding of the coils

In cores of modem dynamoelectric machines there has been an increase in the number of wires, or in the total section of wire conductors that need to fill a given spacing of a core slot. In this respect, the positioning of the wires along the guide bars, as a result of the transfer operation from the winding form, notably influences the filling result that can be obtained from insertion of the coils into the slots of the core. For example, in the case of large wire sections, the turns of the coils that have been formed on the winding form according to a predetermined stratification disposition, i.e. according to an orderly placement of the wires adjacent to each other, needs to be transferred to the insertion tool so that the same stratification disposition is maintained when the wires are placed in the spacing between the guide bars of the insertion tool.

During the insertion operation, the stratification disposition needs to be maintained to favour an unimpeded travel of the wire along the guide bars and also a passage without problems of the wires into the slots of the core. Forcing of the wires during their travel along the guide bars, due to a non stratified distribution of the wires, can damage the single wires or position them incorrectly. The result can be incorrect passage of the wire into the slots, which can produce wrong positioning of the wires within the slots. Ultimately, this can reduce slot fill and also cause misplacement or damage to the insulating wedge that is used to close the slots.

Furthermore, the position reached by the coils along the guide bars needs to be accurate, to guarantee that specific portions of the pushing device engage and push the coils at predetermined positions of the insertion stroke of the pushing device. This is particularly necessary when the coils destined to fill a specific slot surmount each other on the insertions tool, and when coils with a specific order of insertion in a predetermined slot surmount other coils that are later inserted in the same slot, like is disclosed in the above mentioned application.

As mentioned above, the coils are transferred from the form device to the insertion tool by aligning the spacing of the guide bars of the insertion tool with the surface portions of the winding form where the coils to be transferred are positioned. An expulsion device is foreseen for engaging the coils to be transferred and for pushing them along the winding form and along an initial stretch of the guide bars. In the prior art, coils that are successively transferred from the winding form push the previously transferred coils to move the latter further along the guide bars.

The situation of coils pushing other coils, especially if this occurs for significant lengths of travel along the guide bars, can cause incorrect positioning of the wires along the guide bars with consequent loss of the stratification disposition that has been formed previously on the winding form.

The expulsion device is usually integrated into the assembly of the winding form and rotates together with the latter during winding. The movement of the expulsion device for transferring the coils by pushing is related to the positioning of the winding form, in the sense that the position and the stroke of the expulsion device are limited by the position occupied by the winding form along the rotation axis of the unit. The winding form normally moves between a position for winding the coils, which is more distant from the insertion tool, and a position that is adjacent to the winding tool for transferring the coils. The position of the winding form for transferring the coils becomes a limit for the excursion of the expulsion device when the latter needs to push the coils along the guide bars. It is therefore necessary to have that coils push each other along the guide bars, due to the limited position that expulsion member can reach with respect to the extension of the guide bars. However the condition of coils pushing other coils is the origin of the problems mentioned in the foregoing.

Connections leads need to be formed between the coils positioned on the insertion tool for achieving the flow of electric current. The connection leads can be strands of wire that depart from a last formed turn of a coil. Strands that are cut can be a final, or an initial interrupted end of the coil. Leads that are not cut can be continuous wire strands departing from a just wound coil and leading to the initial turn of a next to be wound coil.

The operations to form the connection leads mentioned above can produce a pull on the wires, which causes removal of the wires from their stratification disposition, and therefore give rise to the problems mentioned in the foregoing

### Summary of the Invention

It is therefore an object of the invention to transfer the coils from the form device to the insertion tool by reducing to a minimum the risk of loosing the wire stratification disposition that has been formed on the winding form.

Another object of the invention is to accurately position coils that need to surmount each other on the insertion tool.

A further object of the invention is to provide an expulsion device that is capable of rotating with the winding form during winding, and which is not limited by the position of the winding form when required to push the coils along the guide bars of the insertion tool up to predetermined positions.

Another object is to form leads of the coils without changing the stratification disposition of the coils from where the leads depart.

To achieve the foregoing objects, the invention provides an apparatus for winding coils and forming lead conductors of the coils according to claim 1. The invention also provides a method for winding coils according to claim 13.

The invention provides other features and advantages according to the dependent claims.

According to the invention an expulsion member is provided for transferring the coils from the winding form to an insertion tool. The expulsion member is capable of translating to selectable positions along the extension of the guide bars of the insertion tool for pushing the coils to the position that they need to occupy along the guide bars.

Each coil can be singularly pushed by the expulsion member along the guide bars, therefore without requiring that there be other coils between the expulsion member and the coil being transferred. Accordingly, during application of the pushing force by the expulsion member, the single wires that form the coils move easily and without impediments along the guide bars, and in practice with a direct application of the pushing force during all of the required motion. The end result is that the stratification disposition of the coils is maintained during transfer of the coils from the winding form to the insertion tool.

Formation of a lead extending from the coils occurs by moving a wire dispenser and a wire gripping unit from which extra wire is extracted to form the lead. More particularly, during the movements of the unit, tension is applied on the extra wire to pull it from the dispenser. At the same time, the expulsion member is maintained on the insertion tool at the level of the coil from which the extra wire departs, thereby impeding that wire can be pulled away from the coil.

The invention foresees that the wire is drawn onto the surface of a rotating winding form to form the wire coils. A coil insertion tool having guide bars is aligned with the winding form to receive branches of the wire coils in the spacing defined between the guide bars.

The expulsion member pushes the branches of the wire coils off the surface of the winding form and along the guide bars of the coil insertion tool to predetermined positions.

During winding, rotation of the winding form and rotation of the expulsion member can occur synchronously. The winding form is able to move towards and away with respect to the insertion tool, parallel to the rotation axis of the winding form. The expulsion member is supported by at least a support member having a translation path for translating the expulsion member when requiring to transfer the coils. The at least one support member for translating the expulsion member is located laterally distanced with respect to the rotation axis of the winding form. Translating means for translating the at least one support member for translating the expulsion member are driven by a controlled actuator to achieve a path of the expulsion member that pushes the coils along the guide bars. The path of the expulsion member is not impeded by the position occupied by a support member for supporting the winding form.

### Brief description of the drawings

These and other objects and advantages of the invention will be apparent upon consideration of the following detailed description, taken in conjunction with the accompanying drawings.
Fig. 1 is an elevation partial section view illustrating an apparatus according to the principles of the invention
Fig. 2 is an enlarged view from direction 2 - 2 of Fig. 1 illustrating a portion of the apparatus shown in Fig. 1 aligned with an insertion tool Fig. 3 is a partial section view as seen from directions 3 - 3 of Fig 2.
Fig. 4 is a section view as seen from directions 4 - 4 of Fig. 3 illustrating a portion of the apparatus of Fig. 1 positioned for transfer of coils to an insertion tool.
Fig. 4a is a partial section view as seen from directions 4a - 4a of Fig. 4
Fig 5 is a partial view similar to figure 2 illustrating according to a schematic illustration the apparatus of figure 1 in combination with an insertion tool and a wire manipulator during a stage of forming a lead of a coil. In Fig. 5 certain parts have been omitted for reasons of clarity.
Fig. 6 is a schematic view similar to the view of Fig. 5 illustrating a sequence for positioning a lead. In Fig. 6 certain parts have been omitted for reasons of clarity.

### Description of the preferred embodiments

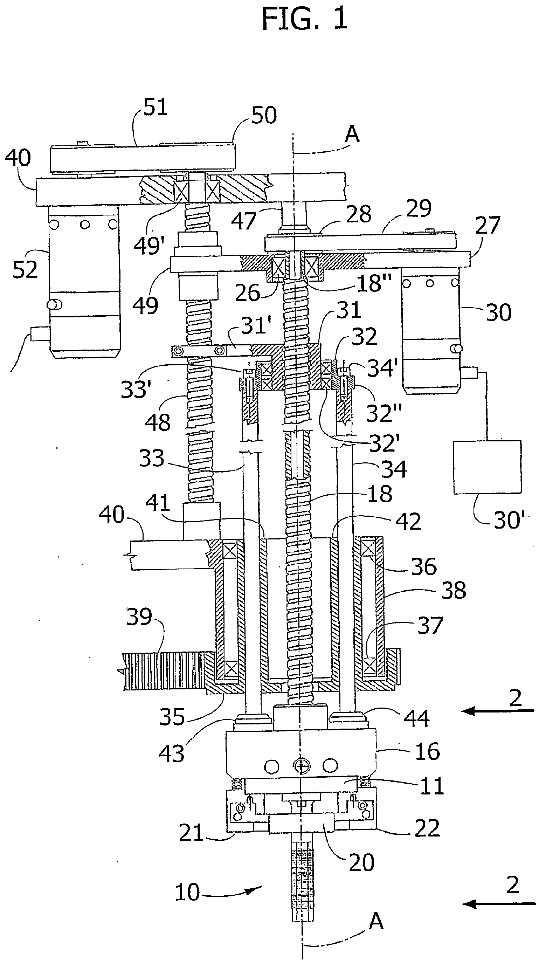

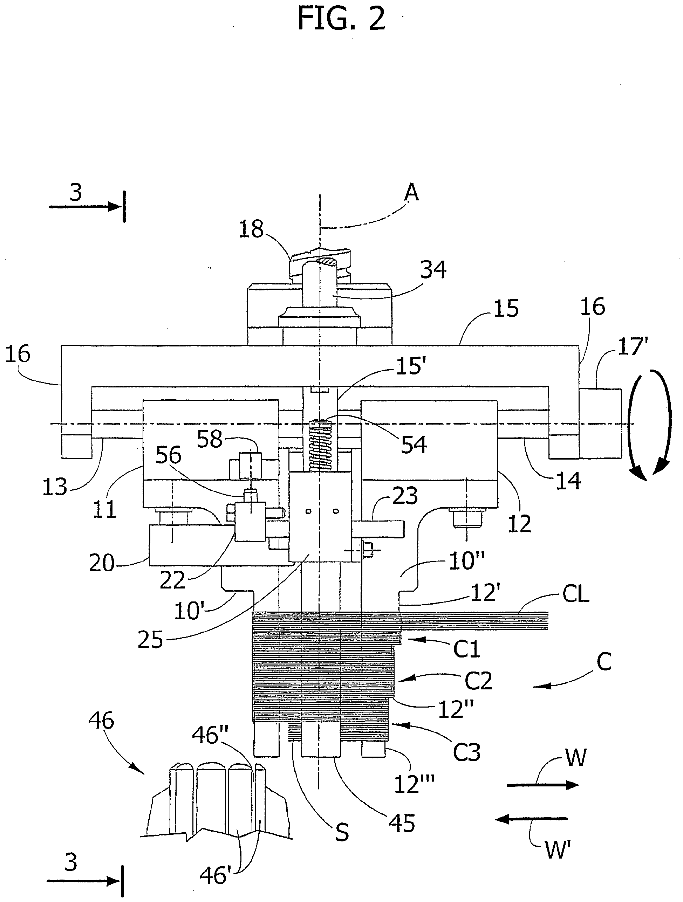

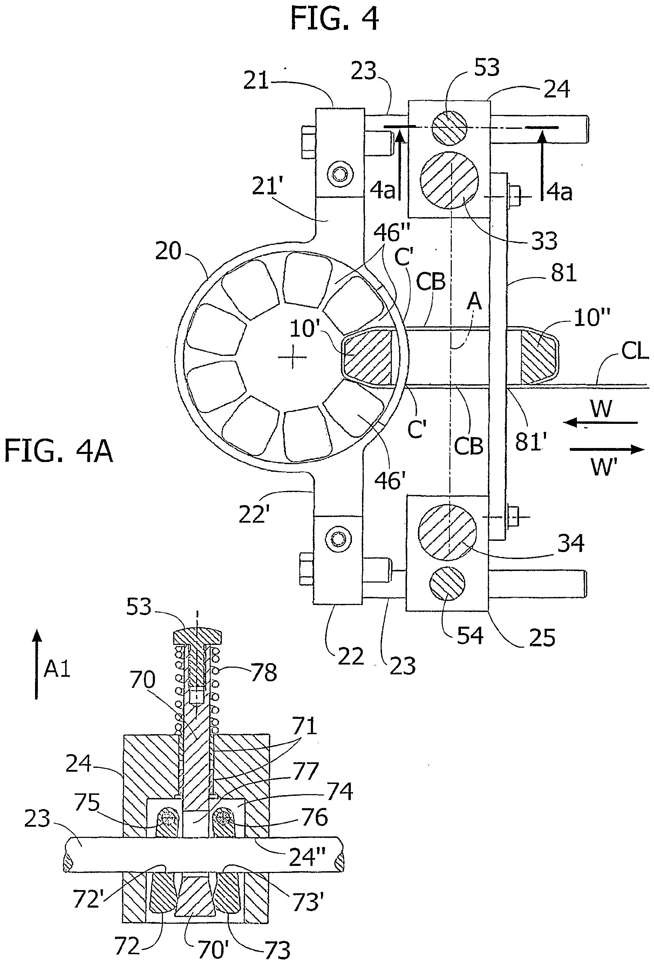

With reference to Figs. 1 - 3, winding form 10 preferably consists of two form members 10' and 10" fixed to support members 11 and 12, respectively. Form member 10" can be provided with coil support surfaces 12', 12", 12"' of various width in direction W for winding on the surfaces coil portions C1, C2 and C3 of various widths in direction W, as shown in Fig. 2. The coil support surface of form member 10' can be of constant width. Form member 10' can be aligned with spacing 46" existing on either side of a guide bar 46' of the insertion tool 46 (see also figure 4). Coil portions C1, C2 and C3 can form together a single coil C, which needs to be transferred to the spacing existing on either side of a guide bar 46'. Each of these spacing can be aligned with a respective slot of the core where the branches CB of the coil portions need to be inserted during a successive insertion operation.

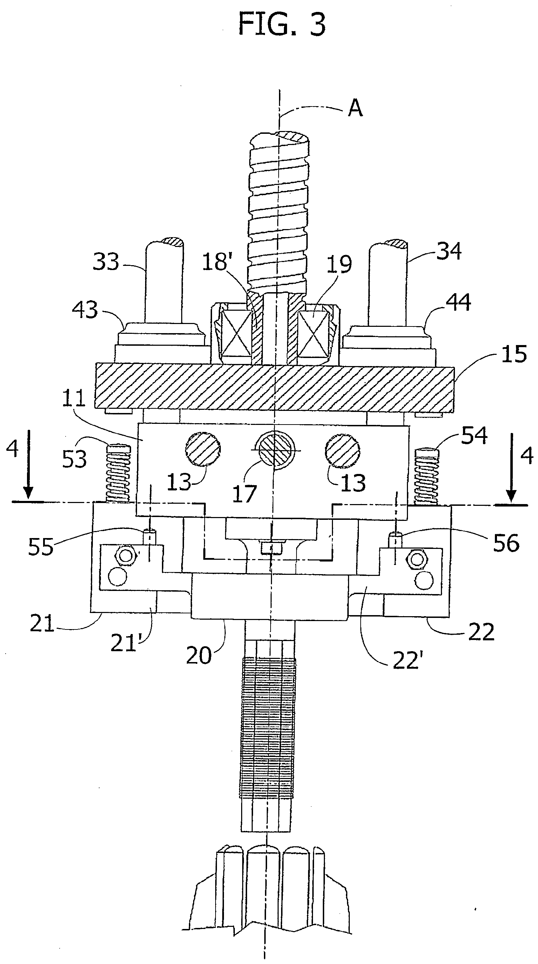

Each of support members 11 and 12 is supported by respective guide rods 13 and 14 (see also Fig. 3). Support members 11 and 12 can be translated towards or away from each other, i.e. in direction W and W' on guide rods 13 and 14 to adjust the width existing between form member 10' and 10", and therefore to vary the width of the coils that need to be wound.

One end of guide rods 13 and 14 is supported by a central support portion 15' of general support member 15, whilst the other end of guide rods 13 and 14 is supported by peripheral portions 16 of general support member 15. Screw member 17 (see Fig. 3) engages in threaded portions of support members 11 and 12. A threaded portion of screw member 17 has a helix oriented in a first direction to engage a threaded seat of support member 11, whilst a second threaded portion of screw member 17 has a helix oriented in an opposite direction to engage a threaded seat of support member 12. In this way, by turning appendix 17' of screw member 17 in a clockwise or anticlockwise direction the support members are either translated towards each other or away from each other to adjust the width existing between form member 10' and 10".

A suitable configuration for expulsion member 20 can be that of an annular ring like is shown in the figures, which encircles the guide bars of the insertion tool. However the expulsion member 20 can have other configurations. Expulsion member 20 is mechanically joined to a first frame member 21 and to a second frame member 22, respectively by portion 21' and portion 22' (see Figs. 3 and 4). The two frame members 21 and 22 can be positioned on opposite sides of axis A and extending in directions opposite to each other, as shown in the figures.

Each of frame members 21 and 22 is provided with a shaft 23. Each shaft 23 is supported in a respective member 24 and 25. When shafts 23 are released from a locking condition created by a locking device (shown in Fig. 4a), which is present in each of members 24 and 25, shafts 23 and therefore frame members 21 and 22 are able to slide parallel to the directions W or W' of adjustment of support member 11. Consequently, expulsion member becomes temporarily connected to support member 11, as is more fully described in the following

An end 18' of tube 18 is assembled on bearing 19, which is supported by general support member 15 (see Figs. 1 and 3). In this way, general support member 15 is connected to tube 18 in the direction parallel to axis A, and allows tube 18 to rotate with respect to general support member 15 around axis A.

The other end 18" of tube 18 is supported in bearing 26, which is supported by general frame member 27. A pulley wheel 28 is assembled on the end of tube 18 near bearing 26 for rotating tube 18 around axis A by means of belt 29. Belt 29 is driven with motor 30, which is supported by general frame member 27. Sleeve 31 is assembled on tube 18. More precisely, tube 18 presents on its cylindrical surface a helical channel with a pitch corresponding to that of a helical channel present inside sleeve 31. Balls are received in the helical channels of the two members to provide an arrangement like that of a threaded sleeve which engages the thread of a tube. In this manner, rotations of tube 18 around axis A by means of motor 30 causes sleeve 31 to translate parallel to axis A, backwards and forwards along tube 18: Arm 31' of sleeve 31 engages the outside surface of screw 48 to avoid rotation of sleeve 31 around axis A.

Collar 32 is supported by sleeve 31 through bearing 32', therefore collar 32 can translate together with sleeve 31 and is able to rotate around axis A with respect to sleeve 31.

Bars 33 and 34 are connected to rim 32" of collar 32 by means of bolts 33' and 34', respectively. Consequently, each of bars 33 and 34 results laterally displaced with respect to axis A and diametrically opposite with respect to each other, as shown in the Figures.

Rotation member 35 is assembled on bearings 36 and 37, which are seated in a cylindrical frame portion 38, and results centered on axis A. Portion 38 can be a stationary portion belonging to the frame 40 of the apparatus. Frame 40 can be supported on the floor of the facility where the apparatus of the invention is installed. Rotation member 35 is rotated around axis A by means of belt 39. Belt 39 is driven by a motor (not shown), which can be supported by frame 40.

Bars 33 and 34 are also assembled in respective bushes 41 and 42 carried by rotation member 35. Bushes 41 and 42 allow bars 33 and 34 to translate parallel to axis A with respect to rotation member 35. The engagement of bushes 41 and 42 with bars 33 and 34 transmits the rotation of member 35 to bars 33 and 34.

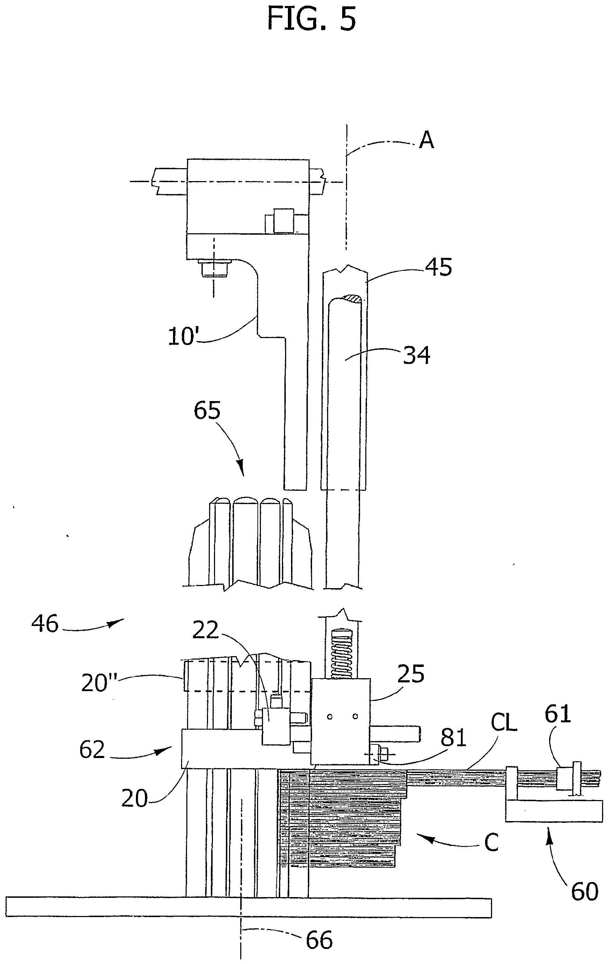

Bars 33 and 34 are also respectively assembled in bushes 43 and 44 (shown externally and not in section) carried by general support member 15. Bushes 43 and 44 allow bars 33 and 34 to translate parallel to axis A and backwards and forwards with respect to general support member 15. The engagement of bars 33 and 34 with bushes 43 and 44 imparts the rotation of member 35 to general support member 15, which in turn rotates form members 10' and 10" around axis A for winding and other operations that draw a wire or plural wires from a wire dispenser 61 (shown in figure 5).

The start end S of a wire or of plural wires to be drawn can be connected to clamp 45 positioned between form members 10' and 10" (see Fig. 2).

The lower ends of bars 33 and 34 can be fixed respectively to members 24 and 25. Consequently, expulsion member 20 can be translated backwards and forwards parallel to axis A by means of bars 33 and 34.

Bars 33 and 34 can be translated backwards and forwards parallel to axis A by means of collar 32. Collar 32 can be translated backwards and forwards parallel to axis A, together with sleeve 31, which can be translated backwards and forwards parallel to axis A by rotating tube 18 with motor 30.

General frame member 27 can be translated backwards and forwards parallel to axis A (see Fig. 1) for translating form members 10' and 10" backwards and forwards parallel to axis A. The translation of general frame member 27 backwards and forwards parallel to axis A occurs on upstanding guide bars like 47 fixed to frame 40. The translation movement of general frame member 27 can be obtained by rotation of screw 48, which engages threaded sleeve 49. Threaded sleeve 49 is fixed to general frame member 27.

Threaded screw 48 is mounted on bearings like 49' seated in frame 40 and has attached a pulley wheel 50. Belt 51 can turn pulley wheel 50, which in turn is rotated with motor 52 flanged to frame 40. In this way, rotation of motor 52 translates frame member 27 backwards and forwards parallel to axis A, which in turn translates form members 10' and 10" backwards and forwards parallel to axis A due to the translation of tube 18.

When requiring to adjust the position of expulsion member 20 to suit the adjustment of form members 10' and 10", bars 33 and 34 can be moved in direction A1 (see Figs. 2, 3, 4 and 4a) to bring the top portions of pins 53 and 54 in abutment with the underside of member 15. Further movement of bars 33 and 34 in direction A1, after abutment of the top portions of pins 53 and 54 causes actuating pins 53 and 54 to release the lock mechanisms that are present inside members 24 and 25 to maintain shafts 23 and 24 temporary locked.

Fig. 4a shows the lock mechanism actuated by pin 53. As shown in Fig. 4a actuating pin 53 is screwed onto to pin 70, which can slide on bushes 71 present inside members 24. The lower end 70' of pin has a conical shape for engaging plate members 72 and 73, which are hinged in seat 74 by means of pins 75 and 76, respectively. Shaft 23 passes through apertures of plate members 72 and 73 and through aperture 77 of pin 70, as shown in Fig. 4a.

Spring 78 normally pushes pin 70 in direction A1, which results in pushing shaft 23 in direction A1 by the engagement of bottoms 72' and 73' of the apertures of plate members 72 and 73 against shaft 23. This pushing action brings the top surface of shaft 23 in engagement with surfaces 24' and 24" of member 24, which results in a locking action on shaft 23 by friction.

The friction action is removed to release shaft 23 by moving pin 71 in the direction opposite to A1, as a result of top portion of pin 54 being moved into abutment with the underside of member 15.

The movement in direction A1 of bars 33 and 34 to release the locking mechanisms of shafts 23 also causes pins 55 and 56 (fig. 3) of members 21 and 22 to be respectively received in a seat 57 (not visible) and in a seat 58 (fig. 2) of slide 11. In this way, when movement of slides 11 and 12 occurs in direction W and W' to adjust the form members, shafts 23 are released and expulsion member 20 is moved integrally with form member 10' due to the engagement of pins 55 and 56 in seats 57 and 58. The end result is that expulsion member 20 becomes positioned in alignment with the new position where the coils will be wound on form members 10' and 10" due to the movement of support member 11.

Transfer of a coil C having portions like C1, C2 and C3 can occur by translating expulsion member from the winding position shown in figure 1 to the transfer position 62 shown in figure 5. The translation can occur by rotating motor 30 for a selected number of rotations as can occur with a programmable and controlled drive 30' for motor 30. Expulsion member 20 pushes on portions C' of coil C during the translation to reach position 62 (see also Fig. 4).

During the translation of the expulsion member 20 to reach position 62, forms 10' and 10" are maintained at the discharge position, which is adjacent the end of guide bars 64'. This position can be normally characterized by the fact that form member 10' does not need to travel deeply into the internal area 65 delimited by guide bars 64'. In fact, the internal area 65 may be occupied by the insertion ram (not shown), which is successively used to accomplish a stroke parallel to axis A for inserting the coils into the slots of the core.

Bars 33 and 34 for translating expulsion member 20 along the insertion tool are not limited in the extension of their movement by the position of form members 10' and 10", nor by the position of member 15 for supporting form members 10' and 10".

As shown in Fig. 5, the bars are able to pass through support member 15 without being obstructed by support member 15.

A further coil having portions like C1, C2 and C3 can be successively transferred to a transfer position by translating expulsion member 20 to a position represented by the dashed line 20". This can occur by selecting for motor 30 a different predetermined number of rotations, by means of drive 30'.

The wire dispenser and gripping unit 60 which holds and delivers a wire or plural wires through dispenser 61 can move in synchronism with expulsion member 20 when transferring the coils to the transfer position 62 shown. This will guarantee that the wire extension CL going to dispenser 60 is maintained of a constant length and that portions of wires of coil C are not pulled out.

To start winding of a successive coil, wire extension CL needs to be clamped by clamp 45 present between the winding form members. This is achieved by forming a further length of the wire extension CL in order to make it reach the clamp through movement of gripping unit 60 which needs to become aligned with the clamp. The movements of gripping unit 60 to achieve the alignment create the further length of wire extension CL by pulling extra wire from dispenser 61. In addition, insertion tool 62 can also be indexed around its centre axis 66 or rotated around axis A to allow unit 60 to place the wire in the clamp, therefore an even further length of wire extension CL can be formed.

During all of these movements, expulsion member 20 remains at the transfer position 62 of the last coil C from which wire CL departs. In this way the underside of expulsion member 20 facing the coil acts as an engagement surface that impedes that extra wire is drawn from coil C.

Once wire extension CL has been clamped by the clamp, the winding forms can be rotated to form a further coil.

The end result is that a wire connection of a predetermined length has been formed between the last wound coil C and a further coil that needs to be wound on winding forms 10' and 10", without pulling wires out of the last wound coil C.

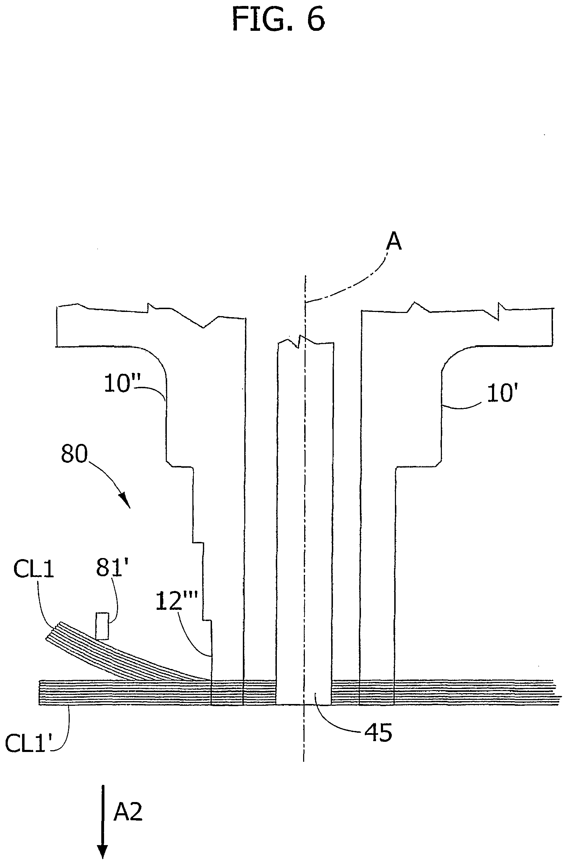

With reference to Fig. 6, which shows the winding form after a half turn rotation around axis A for the winding operation and with an initial lead CL1 extending from the clamp of the winding form. The initial lead CL1 is undesirably deformed towards area 80, where wire or plural wires will be drawn on the winding form. In this situation the deformed portion of the lead CL1 can interfere with wire that is successively dispensed on surface 12"' to form the coils. A portion 81' of cross bar 81 which is fixed to expulsion member 20 (see figure 4) can be brought into alignment (see the position of portion S1' in Fig. 6) with the deformed portion of the lead CL1 by movement of the expulsion member through a selected number of rotations of motor 30. Following the alignment, further movement of the cross bar in direction A2 can deform initial lead CL1 to the position CL1'; in this manner away from area SO so as to avoid the interference with the wire or plural wires that need to be wound on surface 12"'.

As results clearly from the foregoing description, the apparatus of the invention makes it possible to transfer coils from the winding form to the insertion tool without risk of losing the correct stratification condition of the wires produced on the winding form. This is achieved for the reason that it is possible to insert each coil without requiring to push it with another coil, due to there not being undesirable limits to the path of the expulsion member, also for the reason that the wire connection between a wound coil and a coil to be wound later can be formed without removing wire from the wound coil, and also for the reason that means are provided for realigning end portions of wire which are not correctly aligned.

Naturally, while the principle of the invention remains the same, the details of construction and the embodiments may amply vary with respect to what has been described purely by way of example, without departing from the scope of the invention as defined in the claims.

## Claims

1. An apparatus for winding wire coils (C) and forming wire conductor leads (CL) connected to the wire coils; the apparatus comprising:
a winding form (10', 10") for forming the wire coils suitable for rotating to draw wire conductor onto the surface (12', 12", 12''') of the winding form to form the wire coils;
a coil insertion tool (46) having an axis (66) and guide bars (46') of predetermined length for being aligned with the winding form to receive branches (CB) of the wire coils in spacing (46") separating the guide bars (46');
an expulsion member (20) for pushing the branches (CB) of the wire coils (C), after winding of the coils, off the surface of the winding form (10', 10") in the direction of the insertion tool (46);
a rotation assembly (35, 39) for rotating the winding form (10', 10") and the expulsion member around a rotation axis (A) during winding of the coils (C), ;
a first assembly (15, 18, 48, 49, 52) for supporting the winding form (10'10"); and translating the winding form (10', 10") towards and away with respect to the coil insertion tool (46);
a second assembly (18, 31, 33, 34) for supporting the expulsion member (20) and translating the expulsion member along a translation path, for pushing the branches (CB) of the wire coils (C);
wherein the second assembly (18, 31, 33, 34) comprises means (18, 31, 30) for translating the expulsion member (20), after winding of the coils (C), through its predetermined maximum extent of travel along the guide bars without being obstructed by the first assembly and without being dependent of the position occupied by the winding form (10', 10") along the rotation axis (A).

2. The apparatus of claim 1 **characterized in that** the second assembly (18, 31, 33, 34) comprises at least a translation member (33, 34) for translating the expulsion member (20), the translating member being located laterally distanced with respect to the rotation axis (A).

3. The apparatus of claim 2 **characterized in that** the at least one translation member (33, 34) for translating the expulsion member (20) is connected to the translating means (18, 31, 30) by connections means (32, 32') located on a side of the rotation assembly (35, 39) that is opposite to the side where the winding form (10', 10") is located.

4. The apparatus of claim 1 **characterized in that** the means (33, 34) for translating translate the expulsion member (20) to selectable levels along the length of the guide bars (46').

5. The apparatus of claim 2 **characterized in that** the at least one translation member (33, 34) is rotated by the rotation assembly (35, 39) to rotate the expulsion member (20).

6. The apparatus of claim 2 **characterized in that** the at least one translation member (33, 34) travels through a support member (15) of the winding form to translate the expulsion member (20) along the path.

7. The apparatus of claim 2 **characterized in that** the second assembly comprises a shaft (18) with a helical; the helical being engaged by a sleeve (31) connected to the at least one translation member (33, 34) by connections means (32, 32'); wherein the shaft (18) is aligned with the rotation axis (A) and is rotated for translating the at least one translation member (33, 34).

8. The apparatus of claim 7 **characterized in that** the shaft (18) with the helical supports a support member (15) of the winding form (10', 10") and the shaft (18) with the helical is translated for translating the winding form (10', 10").

9. The apparatus of claim 1 **characterized in that** the winding form (10', 10") comprises two wire receiving portions symmetrically positioned with respect to the rotation axis (A) and comprising means (11, 12, 17) for adjusting the distance between the two wire receiving portions in a direction perpendicular to the rotation axis (A).

10. The apparatus of claim 9 **characterized in** further comprising means (56, 58) for translating the expulsion member integral with a portion (10') of the winding form to adjust the expulsion member (20) together with the adjustment of the winding form (10', 10").

11. The apparatus of claim 2 **characterized in that** the at least one translation member (33, 34) is guided to slide through the rotation means (35) and a support member (15) of the winding form (10', 10").

12. The apparatus of claim 1 **characterized in** further comprising a portion (81) integral with the expulsion member; the portion (81) translating with the expulsion member (20) to contact and deform a lead (CL1).

13. A method for winding wire coils (C) and forming wire leads (CL) connected to the wire coils; the method comprising the steps of
rotating a winding form (10', 10") and an expulsion member (20) for forming the wire coils around an axis (A);
after winding, translating the expulsion member, for transferring branches (CB) of the wire coils from the winding form (10', 10") to spacing (46") existing between guide bars (46') of an insertion tool (46);
positioning the winding form (10', 10") in a position for aligning the winding form with the guide bars (46") of the insertion tool to accomplish the transferring;
wherein the method further comprises:
in said translating step after winding, translating the expulsion member (20) through its predetermined maximum extent of travel along the guide bars (46') without being obstructed by the positioning of the winding form (10', 10") and without being dependent of the position occupied by the winding form along the rotation axis (A).

14. The method of claim 13 **characterized in** further comprising providing at least a translation member (33, 34) for translating the expulsion member (20); and translating the translation member along a path that is parallel and laterally distanced with respect to the rotation axis (A).

15. The method of claim 13 **characterized in** further comprising translating the expulsion member (20) to selectable levels along the length of the guide bars (46') to push the branches (CB) of the wire coils to various positions along the guide bars (46')

16. The method of claim 14 **characterized in that**, after pushing a coil (C) along the guide bars (46') with the expulsion member (20) to a predetermined level (62), the expulsion member is maintained at the level during forming of a lead conductor (CL) of a further coil to be wound.

17. The method of claim 13 further comprising translating the expulsion member (20) to engage a portion (81) of the expulsion member (20) with a strand (CL1) of wire lead fixed to the winding form (10, 10"); and moving the expulsion member (20) to deform the strand after engagement with the strand.

## Patentansprüche

1. Vorrichtung zum Wickeln von Drahtspulen (C) und Bilden von Drahtleitern (CL), die mit den Drahtspulen verbunden sind; wobei die Vorrichtung aufweist:
eine Wicklungsform (10', 10") zum Bilden der Drahtspulen, welche zum Drehen geeignet ist, um den Drahtleiter auf die Oberfläche (12', 12", 12"') der Wicklungsform zu ziehen, um die Drahtspulen zu bilden;
ein Spuleneinführwerkzeug (46) mit einer Achse (66) und Führungsstangen (46') mit einer vorbestimmten Länge, um mit der Wickelform ausgerichtet zu werden, um Zweige (CB) der Drahtspulen in einem Abstand (46") aufzunehmen, der die Führungsstangen (46') trennt;
ein Ausstosselement (20) zum Schieben der Zweige (CB) der Drahtspulen (C) in Richtung des Spuleneinführwerkzeuges (46) von der Oberfläche der Wickelform (10', 10"), nach dem Aufwickeln der Spulen;
eine Drehanordnung (35, 39) zum Drehen der Wicklungsform (10', 10") und des Ausstosselementes um eine Drehachse (A) während des Wickelns der Spulen (C);
eine erste Anordnung (15, 18, 48, 49, 52) zum Halten der Wicklungsform (10', 10") und zum Verschieben der Wicklungsform (10', 10") gegen das und weg vom Spuleneinführungswerkzeug (46);
eine zweite Anordnung (18, 31, 33, 34) zum Stützen des Ausstosselements (20) und zum Verschieben des Ausstosselementes entlang eines Translationsweges, zum Schieben der Zweige (CB) der Drahtspulen (C);
wobei die zweite Anordnung (18, 31, 33, 34) Mittel (18, 31, 30) zum Verschieben des Ausstosselementes (20), nach dem Aufwickeln der Spulen (C), durch seine vorgegebene maximale Ausfahrstrecke entlang der Führungsstangen (46') aufweist, ohne von der ersten Anordnung behindert zu werden und ohne von der von der Wickelform (10', 10") belegten Position entlang der Drehachse (A) abhängig zu sein.

2. Vorrichtung nach Anspruch 1, **dadurch gekennzeichnet, dass** die zweite Anordnung (18, 31, 33, 34) mindestens ein Translationsbauteil (33, 34) zum Verschieben des Ausstosselementes (20) aufweist, wobei das Translationsbauteil seitlich beabstandet ist in Bezug auf die Drehachse (A).

3. Vorrichtung nach Anspruch 2, **dadurch gekennzeichnet, dass** das mindestens eine Translationsbauteil (33, 34) zum Verschieben des Ausstosselementes (20) mit den Translationsmitteln (18, 31, 30) durch Verbindungsmittel (32, 32') verbunden ist, die auf einer Seite der Rotationsanordnung (35, 39) angeordnet sind, die der Seite gegenüberliegt, an der die Wicklungsform (10',10") angeordnet ist.

4. Vorrichtung nach Anspruch 1, **dadurch gekennzeichnet, dass** die Mittel (33, 34) zum Verschieben das Ausstosselement (20) auf wählbare Stufen entlang der Länge der Führungsstangen (46') verschieben.

5. Vorrichtung nach Anspruch 2, **dadurch gekennzeichnet, dass** das mindestens eine Translationsbauteil (33, 34) mittels der Drehanordnung (35, 39) gedreht wird, um das Ausstosselement (20) zu drehen.

6. Vorrichtung nach Anspruch 2, **dadurch gekennzeichnet, dass** sich das mindestens eine Translationsbauteil (33, 34) durch ein Stützglied (15) der Wickelform hindurchbewegt, um das Ausstosselement (20) auf dem Pfad zu verschieben.

7. Vorrichtung nach Anspruch 2, **dadurch gekennzeichnet, dass** die zweite Anordnung eine Welle (18) mit einer Wendel aufweist; wobei die Wendel mit einer Hülse (31) in Eingriff steht, wobei die Hülse mit dem mindestens einen Translationsbauteil (33, 34) durch Verbindungsmittel (32, 32') verbunden ist; wobei die Welle (18) mit der Drehachse (A) ausgerichtet ist und zum Verschieben des mindestens einen Translationsbauteils (33, 34) gedreht wird.

8. Vorrichtung nach Anspruch 7, **dadurch gekennzeichnet, dass** die Welle (18) mit der Wendel ein Stützglied (15) der Wickelform (10', 10") stützt und die Welle (18) mit der Wendel verschoben wird zum Verschieben der Wicklungsform (10', 10").

9. Vorrichtung nach Anspruch 1, **dadurch gekennzeichnet, dass** die Wicklungsform (10', 10") zwei in Bezug auf die Drehachse (A) symmetrisch positionierte Drahtaufnahmeabschnitte aufweist und Mittel (11, 12, 17) zur Einstellung des Abstandes zwischen den beiden Drahtaufnahmeabschnitten in einer Richtung senkrecht zur Drehachse (A) aufweist.

10. Vorrichtung nach Anspruch 9, **dadurch gekennzeichnet, dass** sie ferner Mittel (56, 58) zum Verschieben des Ausstosselements aufweist, wobei die Mittel mit einem Abschnitt (10') der Wickelform einstückig sind, um das Ausstosselement (20) zusammen mit der Wicklungsform (10', 10") einzustellen.

11. Vorrichtung nach Anspruch 2, **dadurch gekennzeichnet, dass** das mindestens eine Translationsbauteil (33, 34) geführt wird, um durch die Drehmittel (35) und ein Stützglied (15) der Wickelform (10', 10") zu gleiten.

12. Vorrichtung nach Anspruch 1, **dadurch gekennzeichnet, dass** sie ferner einen Abschnitt (81) umfasst, der mit dem Ausstosselement einstückig ist; wobei sich der Abschnitt (81) mit dem Ausstosselement (20) verschiebt, um eine Leitung (CL1) zu kontaktieren und zu verformen.

13. Verfahren zum Aufwickeln von Drahtspulen (C) und Formen von Drahtleitungen (CL), die mit den Drahtspulen verbunden sind; wobei das Verfahren die folgenden Schritte enthält:
Drehen einer Wicklungsform (10', 10") und eines Ausstosselements (20) um eine Achse (A), um die Drahtspulen zuformen;
Nach dem Wickeln, Verschieben des Ausstossgliedes zum Versetzen von Zweigen (CB) der Drahtspulen von der Wicklungsform (10', 10") zu einen zwischen Führungsstangen (46') eines Einführwerkzeuges (46) bestehenden Abstand (46");
Positionieren der Wicklungsform (10', 10") in einer Position zum Ausrichten der Wickelform mit den Führungsstangen (46") des Einführwerkzeuges, um das Versetzen zu erreichen,
wobei die Verfahren ausserdem enthält:
in dem Verschiebungsschritt nach dem Aufwickeln, Verschieben des Ausstosselements (20) durch seine vorgegebene maximale Ausfahrstrecke entlang der Führungsstangen (46') ohne durch die Positionierung der Wickelform (10', 10 ") behindert zu werden und ohne abhängig zu sein von der durch die Wicklungsform eingenommenen Position entlang der Drehachse (A).

14. Verfahren nach Anspruch 13, **dadurch gekennzeichnet, dass** das Verfahren ausserdem enthält:
Bereitstellen mindestens eines Translationsbauteils (33, 34) zum Verschieben des Ausstosselements (20) und Verschieben des Translationsbauteils entlang eines Pfades, der parallel zu und seitlich beabstandet zu der Drehachse (A) ist.

15. Verfahren nach Anspruch 13, **dadurch gekennzeichnet, dass** das Verfahren enthält:
Verschieben des Ausstosselements (20) zu wählbaren Stufen entlang der Länge der Führungsstangen (46'), um die Zweige (CB) der Drahtspulen auf verschiedene Positionen entlang der Führungsschienen zu stossen (46').

16. Verfahren nach Anspruch 14, **dadurch gekennzeichnet, dass** nach dem Stossen einer Spule (C) entlang der Führungsstangen (46') mit dem Ausstosselement (20) zu einer vorbestimmten Stufe (62), das Ausstosselement (20) auf der Stufe gehalten wird, während eine Drahtleitung (CL) einer weiteren zu wickelnden Spule geformt wird.

17. Verfahren nach Anspruch 13, **dadurch gekennzeichnet, dass** das Verfahren enthält:
Verschieben des Ausstosselements (20) um einen Abschnitt (81) des Ausstosselementes (20) mit einem Strang (CL1) der Leitung, die an der Wickelform (10, 10") befestigt ist, in Eingriff zu bringen; und Bewegen des Ausstosselements (20), um den Strang nach dem Eingriff mit dem Strang zu verformen.

## Revendications

1. Appareil pour enrouler des bobines de fil (C) et former des fils conducteurs (CL) raccordés aux bobines de fil ; l'appareil comprenant :
une forme d'enroulement (10', 10") pour former les bobines de fil adaptées pour tourner afin de tirer un fil conducteur sur la surface (12', 12", 12"') de la forme d'enroulement pour former les bobines de fil ;
un outil d'insertion de bobine (46) ayant un axe (66) et des barres de guidage (46') de longueur prédéterminée pour être aligné avec la forme d'enroulement pour recevoir des branches (CB) des bobines de fil dans un espace (46") séparant les barres de guidage (46') ;
un élément d'expulsion (20) pour pousser les branches (CB) des bobines de fil (C), après enroulement des bobines, hors de la surface de la forme d'enroulement (10', 10") dans la direction de l'outil d'insertion (46) ;
un ensemble de rotation (35, 39) pour faire tourner la forme d'enroulement (10', 10") et l'élément d'expulsion autour d'un axe de rotation (A) pendant l'enroulement des bobines (C) ;
un premier ensemble (15, 18, 48, 49, 52) pour supporter la forme d'enroulement (10', 10") ; et déplacer la forme d'enroulement (10', 10") en translation vers l'outil d'insertion de bobine (46) et en s'éloignant de celui-ci ;
un deuxième ensemble (18, 31, 33, 34) pour supporter l'élément d'expulsion (20) et déplacer l'élément d'expulsion en translation le long d'une trajectoire de translation, pour pousser les branches (CB) des bobines de fil (C) ; dans lequel
le deuxième ensemble (18, 31, 33, 34) comprend des moyens (18, 31, 30) pour déplacer l'élément d'expulsion (20) en translation, après enroulement des bobines (C), sur son étendue de déplacement maximale prédéterminée le long des barres de guidage sans être obstrué par le premier ensemble et sans dépendre de la position occupée par la forme d'enroulement (10', 10") le long de l'axe de rotation (A).

2. Appareil de la revendication 1, **caractérisé en ce que** le deuxième ensemble (18, 31, 33, 34) comprend au moins un élément de translation (33, 34) pour déplacer l'élément d'expulsion (20) en translation, l'élément de translation étant situé de manière à être latéralement éloigné de l'axe de rotation (A).

3. Appareil de la revendication 2, **caractérisé en ce que** l'au moins un élément de translation (33, 34) pour déplacer l'élément d'expulsion (20) en translation est raccordé aux moyens de translation (18, 31, 30) par des moyens de raccordement (32, 32') situés sur un côté de l'ensemble de rotation (35, 39) qui est opposé au côté où la forme d'enroulement (10', 10") est située.

4. Appareil de la revendication 1, **caractérisé en ce que** les moyens (33, 34) de translation déplacent l'élément d'expulsion (20) en translation à des niveaux pouvant être sélectionnés sur la longueur des barres de guidage (46').

5. Appareil de la revendication 2, **caractérisé en ce que** l'au moins un élément de translation (33, 34) est mis en rotation par l'ensemble de rotation (35, 39) pour faire tourner l'élément d'expulsion (20).

6. Appareil de la revendication 2, **caractérisé en ce que** l'au moins un élément de translation (33, 34) se déplace à travers un élément de support (15) de la forme d'enroulement pour déplacer l'élément d'expulsion (20) en translation le long de la trajectoire.

7. Appareil de la revendication 2, **caractérisé en ce que** le deuxième ensemble comprend un arbre (18) ayant un canal hélicoïdal ; le canal hélicoïdal étant engagé par un manchon (31) raccordé à l'au moins un élément de translation (33, 34) par des moyens de raccordement (32, 32') ; où l'arbre (18) est aligné avec l'axe de rotation (A) et est mis en rotation pour déplacer en translation l'au moins un élément de translation (33, 34).

8. Appareil de la revendication 7, **caractérisé en ce que** l'arbre (18) avec le canal hélicoïdal supporte un élément de support (15) de la forme d'enroulement (10', 10") et l'arbre (18) avec le canal hélicoïdal se déplace en translation pour déplacer la forme d'enroulement (10', 10") en translation.

9. Appareil de la revendication 1, **caractérisé en ce que** la forme d'enroulement (10', 10") comprend deux parties de réception de fil positionnées symétriquement par rapport à l'axe de rotation (A) et comprenant des moyens (11, 12, 17) pour régler la distance entre les deux parties de réception de fil dans une direction perpendiculaire à l'axe de rotation (A).

10. Appareil de la revendication 9, **caractérisé en ce qu'**il comprend en outre des moyens (56, 58) pour déplacer en translation l'élément d'expulsion d'un seul tenant avec une partie (10') de la forme d'enroulement pour régler l'élément d'expulsion (20) conjointement avec le réglage de la forme d'enroulement (10', 10").

11. Appareil de la revendication 2, **caractérisé en ce que** l'au moins un élément de translation (33, 34) est guidé pour glisser à travers le moyen de rotation (35) et un élément de support (15) de la forme d'enroulement (10', 10").

12. Appareil de la revendication 1, **caractérisé en ce qu'**il comprend en outre une partie (81) solidaire de l'élément d'expulsion; la partie (81) se déplaçant en translation avec l'élément d'expulsion (20) pour venir en contact avec un fil conducteur (CL1) et le déformer.

13. Procédé pour enrouler des bobines de fil (C) et former des fils conducteurs (CL) raccordés aux bobines de fil ; le procédé comprenant les étapes qui consistent
à faire tourner une forme d'enroulement (10', 10") et un élément d'expulsion (20) pour former les bobines de fil autour d'un axe (A) ;
à déplacer, après enroulement, l'élément d'expulsion en translation, pour transférer des branches (CB) des bobines de fil depuis la forme d'enroulement (10', 10") à un espace (46") existant entre des barres de guidage (46') d'un outil d'insertion (46) ;
à positionner la forme d'enroulement (10', 10") dans une position pour aligner la forme d'enroulement avec les barres de guidage (46") de l'outil d'insertion pour réaliser le transfert ;
dans lequel le procédé comprend en outre le fait :
de déplacer, dans ladite étape de translation après enroulement, l'élément d'expulsion (20) en translation sur son étendue de déplacement maximale prédéterminée le long des barres de guidage (46') sans être obstrué par le positionnement de la forme d'enroulement (10', 10") et sans dépendre de la position occupée par la forme d'enroulement le long de l'axe de rotation (A).

14. Procédé de la revendication 13, **caractérisé en ce qu'**il comprend en outre le fait de fournir au moins un élément de translation (33, 34) pour déplacer l'élément d'expulsion (20) en translation ; et de déplacer en translation l'élément de translation le long d'une trajectoire qui est parallèle à l'axe de rotation (A) et latéralement éloignée de celui-ci.

15. Procédé de la revendication 13, **caractérisé en ce qu'**il comprend en outre la translation de l'élément d'expulsion (20) à des niveaux pouvant être sélectionnés sur la longueur des barres de guidage (46') pour pousser les branches (CB) des bobines de fil à différentes positions le long des barres de guidage (46').

16. Procédé de la revendication 14, **caractérisé en ce qu'**après avoir poussé une bobine (C) le long des barres de guidage (46') avec l'élément d'expulsion (20) à un niveau prédéterminé (62), l'élément d'expulsion est maintenu au niveau pendant la formation d'un fil conducteur (CL) d'une bobine supplémentaire à enrouler.

17. Procédé de la revendication 13, comprenant en outre la translation de l'élément d'expulsion (20) pour engager une partie (81) de l'élément d'expulsion (20) avec un toron (CL1) de fil conducteur fixé à la forme d'enroulement (10, 10") ; et le déplacement de l'élément d'expulsion (20) pour déformer le toron après engagement avec le toron.
